(19) Europäisches Patentamt
European Patent Office
Office européen des brevets

(11) **EP 2 083 512 A1**

## (12) EUROPEAN PATENT APPLICATION
published in accordance with Art. 153(4) EPC

(43) Date of publication:
**29.07.2009 Bulletin 2009/31**

(21) Application number: **07831535.5**

(22) Date of filing: **09.11.2007**

(51) Int Cl.:
*H02M 7/48* (2007.01)   *H05B 41/24* (2006.01)
*H05B 41/282* (2006.01)

(86) International application number:
**PCT/JP2007/071804**

(87) International publication number:
**WO 2008/059764 (22.05.2008 Gazette 2008/21)**

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **13.11.2006   JP 2006306959**

(71) Applicant: **Harison Toshiba Lighting Corporation
Imabari-shi, Ehime 794-8510 (JP)**

(72) Inventors:
• **MAEDA, Syouhei
Imabari-shi
Ehime 794-8510 (JP)**
• **KATO, Yoshito
Tottori-shi
Tottori 680-0812 (JP)**

(74) Representative: **Kramer - Barske - Schmidtchen
European Patent Attorneys
Landsberger Strasse 300
80687 München (DE)**

(54) **DISCHARGE LAMP LIGHTING APPARATUS**

(57)    The lighting device for a discharge lamp includes a bridge type rectifying and converting circuit CR1, feedback circuits FB1, FB2, a chopper circuit CR2, a charge circuit CR3, a resonant circuit CR4 resonates with a high frequency signal and lights discharge lamp DL connected to the output end by the resonant voltage, an inverter circuit CR5 which converts the DC power stored in the charge circuit by an alternate switching action of a pair of switching elements Q1 and Q2 into high frequency AC power, and a switch device connected between a connecting point J3 of capacitors C1, C2 of the charge circuit and a connecting point J2 of a pair of rectifying elements D1, D2.

The lighting device for a discharge lamp can correspond to a multiple variation of a power supply voltage by a construction which uses the same switching elements by step-up chopper circuit and by inverter circuit in common and changes duty factor of the switching elements within a predetermined range.

Fig.1

**Description**

TECHNICAL FIELD

The present invention relates to a lighting device for a discharge lamp.

BACKGROUND ART

Conventionally, a lighting device for a discharge lamp which lights discharge lamps by a high frequency current using a low frequency source such as a commercial AC source device is known as described in Japanese unexamined Patent Documents 2005-124369, 2005-124370, and 2005-124371.

The lighting devices for a discharge lamp described in these Patent Documents include a bridge type rectifying and converting circuit which is composed of a pair of switching elements and a pair of rectifying elements connected in parallel, an inductor connected in series between the rectifying and converting circuit and a AC power source, a feedback circuit composed of a first and a second feedback components, the first feedback circuit component connected in parallel with a portion connecting the inductor and the AC power source in series, the second feedback circuit component connected in parallel with the first feedback circuit component, a chopper circuit containing a pair of switching elements, and a third and a fourth rectifying elements provided between the first and the second feedback circuit components and the pair of switching elements. The lighting device for a discharge lamp described is called as a neutral point type step up noninversion inverter, which has a simple circuit configuration and generates few high harmonics.

On the other hand, lighting devices for a discharge lamp are required to operate with such various commercial source voltages as 115V, 200V and 220V, due to growing product needs in a global market. Namely, the devices are required to have a power regulating function in accordance with input/output variation. As a power regulating function for such input/output variation, duty control of the pair of switching elements, contained in a step-up chopper circuit or in an inverter circuit composing the device, is generally used. However, in the case of conventional devices mentioned above, there exists a limit in the variation range of the duty ratio of the switching elements because the chopper action and the inverter action are carried out with a single common switching element. As a result, there was a problem that an allowable range of the input/output variation for possible power regulation is limited.

The present invention was made to resolve the above problems in the conventional technology. One of the objects of the present invention is to provide a lighting device for a discharge lamp capable of operating at various source voltages without greatly changing the duty of switching elements even though the device employs switching elements commonly used for the step-up chopper circuit and the inverter circuit.

DISCLOSURE OF THE INVENTION

A lighting device for a discharge lamp according to the present invention comprises: a bridge type rectifying and converting circuit including a pair of switching elements connected in series, each of which is switched alternately by a high frequency signal, a pair of rectifying elements connected in series, which is connected in parallel with the pair of switching elements connected in series, and an inductor and a low frequency AC power source connected in series between a connecting point of the pair of switching elements and a connecting point of the pair of rectifying elements; a chopper circuit including a feedback circuit for feeding back counter electromotive force (herein after referred to as "EMF") generated in the inductor of the bridge type rectifying and converting circuit and at least one of the pair of switching elements; a charge circuit connected to the output of the chopper circuit, the charge circuit including at least two capacitors connected in series; a resonant circuit for resonating with a high frequency voltage, so as to light a discharge lamp connected to the output end of the resonant circuit with the resonant voltage, an inverter circuit for converting DC power into a high frequency voltage charged in the charge circuit in response to the alternate switching action by the pair of switching elements, and supplying the high frequency voltage to the resonant circuit; and a switching device having one end connected to a connecting point of the two capacitors of the charge circuit and the other end connected to a connecting point of the pair of rectifying elements for selectively connecting or disconnecting the connecting points.

According to the present invention, a discharge lamp may be connected to the output end of the resonance circuit.

The lighting device according to the present invention can be operated with various source voltages without greatly changing the duty of the switching elements, even though the same switching elements are used in common by the step-up chopper circuit and by the inverter circuit.

BRIEF DESCRIPTION OF THE DRAWINGS

[FIG. 1]

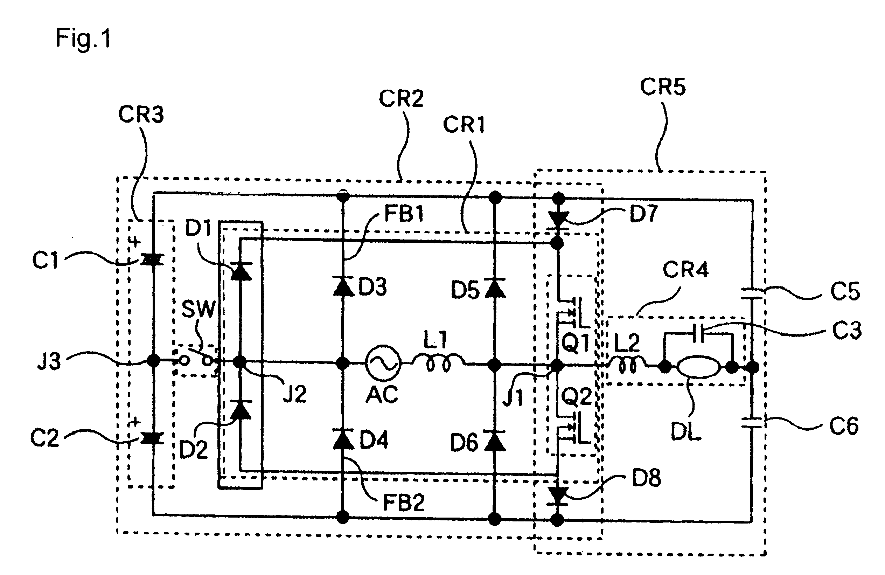

FIG. 1 is a circuit diagram showing a lighting device for a discharge lamp according to an embodiment of the present invention.
[FIG. 2A]

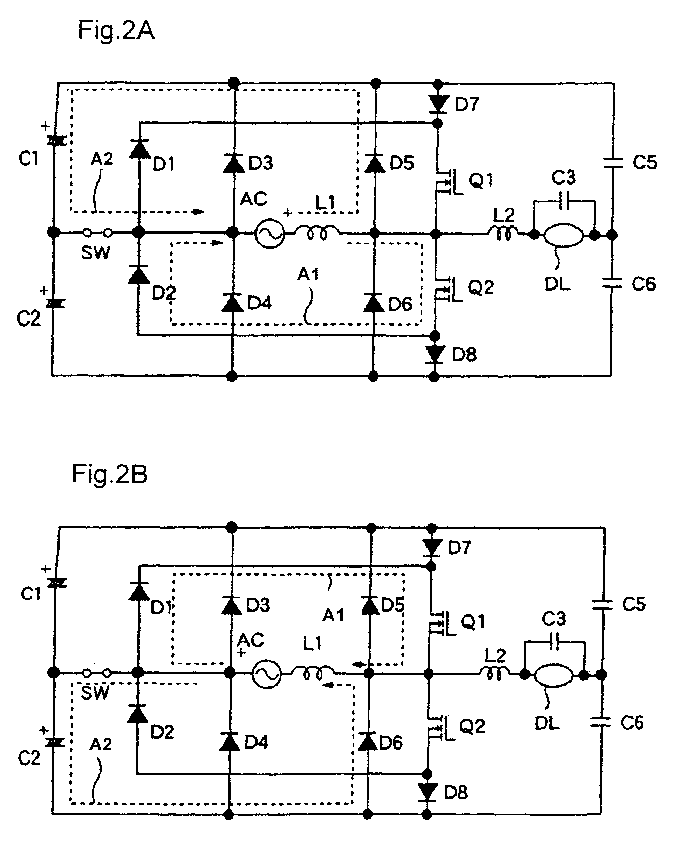

FIG. 2A is a circuit diagram showing a current flow in Mode 1 operation of the lighting device according to the embodiment of the present invention.
[FIG. 2B]
FIG. 2B is a circuit diagram showing a current flow in Mode 2 operation of the lighting device according to the embodiment of the present invention.
[FIG. 3A]

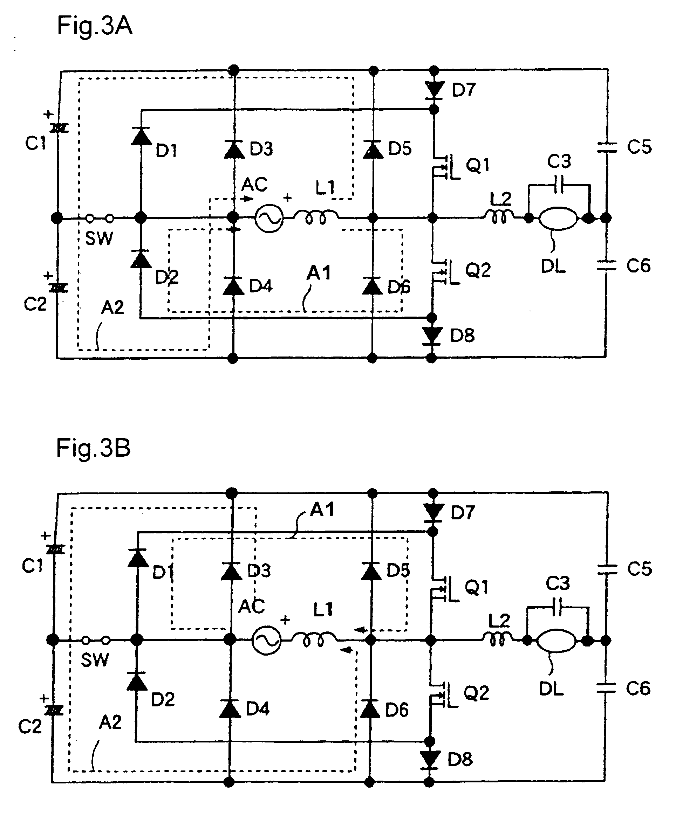

FIG. 3A is a circuit diagram showing a current flow in Mode 3 operation of the lighting device according to the embodiment of the present invention.
[FIG. 3B]
FIG. 3B is a circuit diagram showing a current flow in Mode 4 operation of the lighting device according to the embodiment of the present invention.
[FIG. 4A]

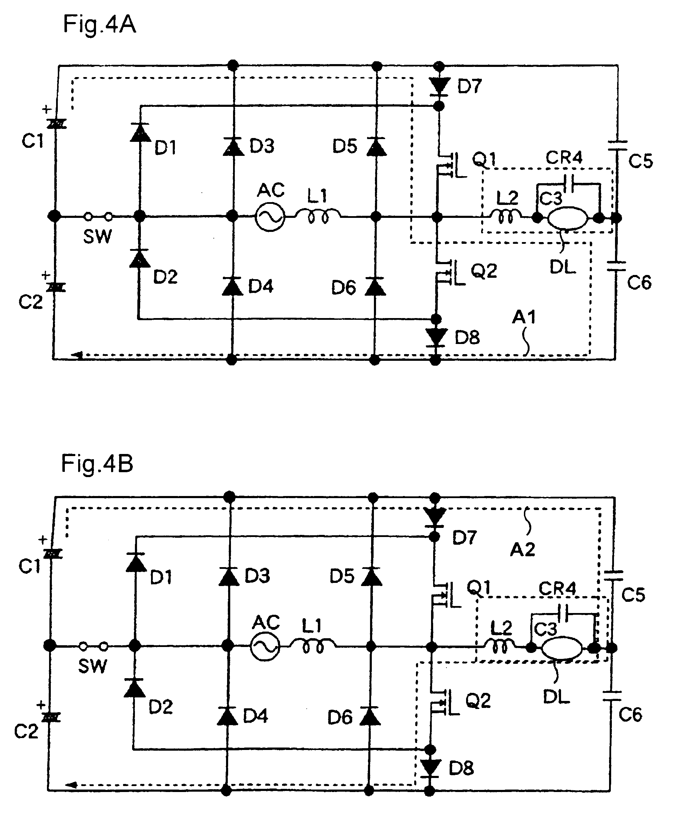

FIG. 4A is a circuit diagram showing a current flow in lighting operation by the inverter of the lighting device according to the embodiment shown in FIG. 1.
[FIG. 4B]
FIG. 4B is a circuit diagram showing a current flow in lighting operation by the inverter of the lighting device according to the embodiment shown in FIG. 1.
[FIG. 5A]

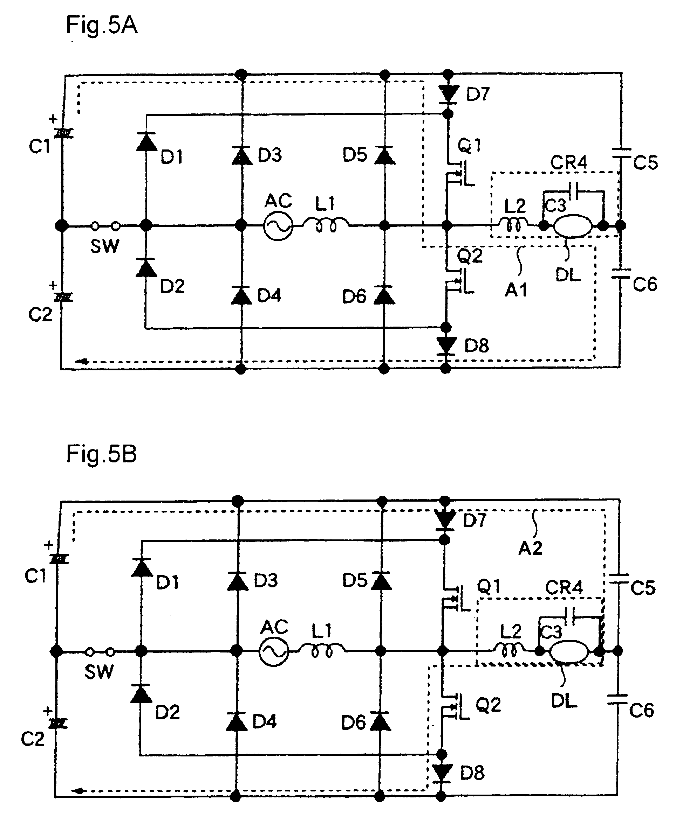

FIG. 5A is a circuit diagram showing a current flow in lighting operation by the inverter of the lighting device according to the embodiment shown in FIG. 1.
[FIG. 5B]
FIG. 5B is a circuit diagram showing a current flow in lighting operation by the inverter of the lighting device according to the embodiment shown in FIG. 1.
[FIG. 6]

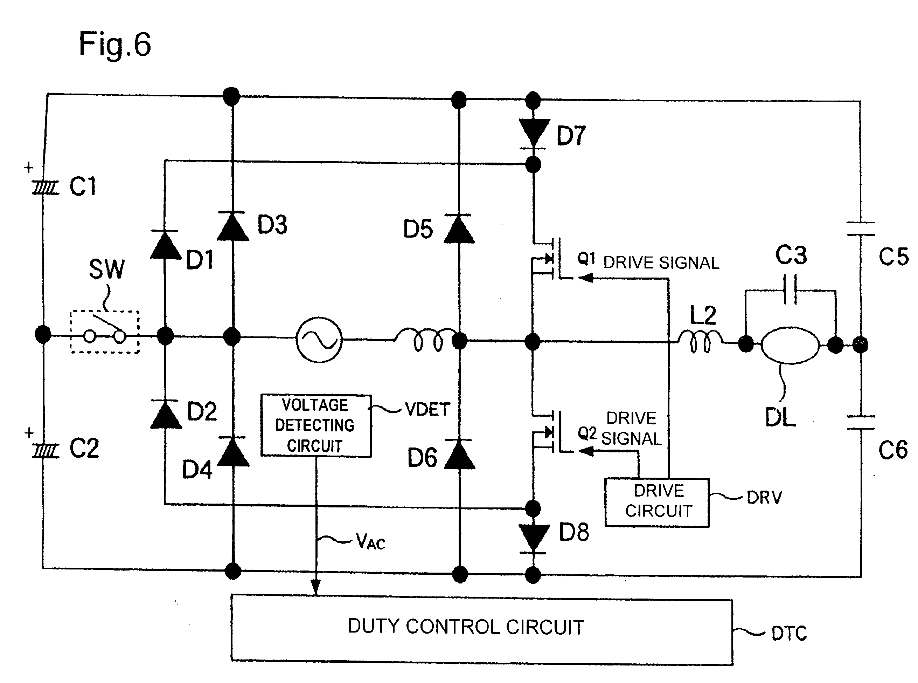

FIG. 6 is a circuit diagram showing a detailed circuit configuration of the lighting device according to the embodiment of the present invention shown in FIG. 1.
[FIG. 7]

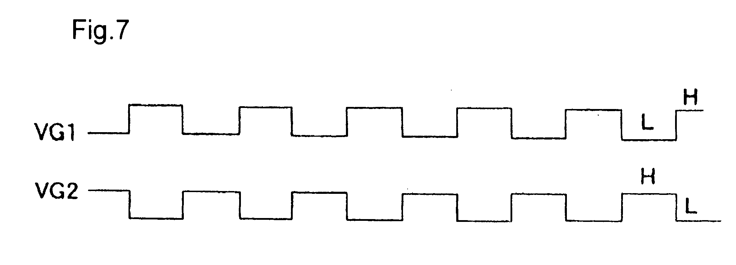

FIG. 7 is a waveform chart showing an example of a drive signal VG1 for a switching element Q1 and a drive signal VG2 for a switching element Q2.
[FIG. 8A]

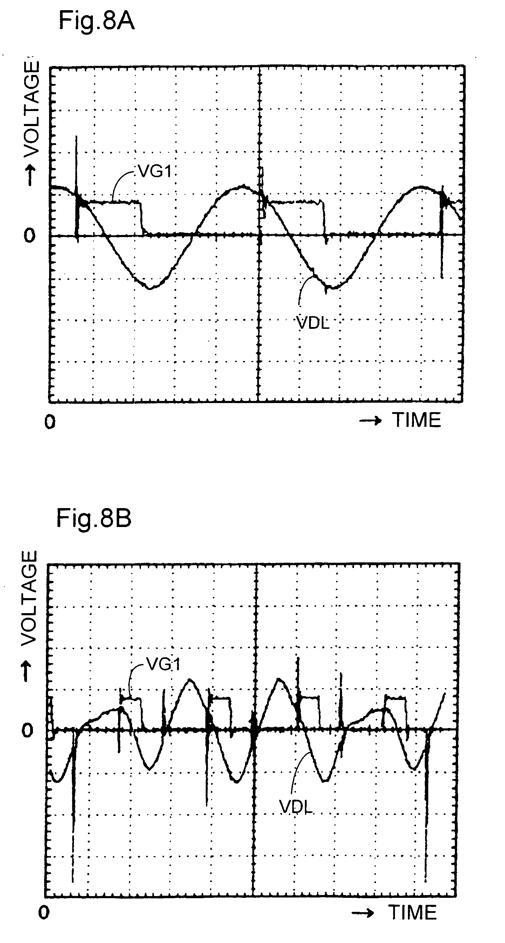

FIG. 8A is a graph showing a load output signal waveform when the duty factor of the drive signal VG1 for Q1 and the drive signal VG2 for Q2 are about 43%. Here, VG1 represents a pulse waveform of the drive signal VG1 for Q1, and VDL represents a drive voltage waveform of the discharge lamp DL.
[FIG. 8B]
FIG. 8B is a graph showing a load output signal waveform when the duty factor of the drive signal VG1 for Q1 and the drive signal VG2 for Q2 are about 30%. Here, VG1 represents a pulse waveform of the drive signal VG1 for Q1, and VDL represents a drive voltage waveform of the discharge lamp DL.

DESCRIPTION OF THE PREFERRED EMBODIMENTS

Hereinafter, one embodiment of the present invention will be explained in detail referring to the figures attached herewith. FIG. 1 shows a circuit configuration of a lighting device for a discharge lamp according to one embodiment of the present invention. The lighting device is provided with a bridge type rectifying and converting circuit CR1. This bridge type rectifying and converting circuit CR1 includes a pair of switching elements Q1 and Q2 connected in series, each of which is switched alternately by a high frequency signal, a pair of rectifying elements D1 and D2 connected in series, which is connected in parallel with the switching elements Q1 and Q2, and a commercial low frequency AC power source AC and an inductor L1 connected in series, which are provided between a connecting point J1 of the pair of switching elements Q1 and Q2, and a connecting point J2 of the pair of rectifying elements D1 and D2. The switching elements Q1 and Q2 may be composed, for example, of power MOSFETs. High frequency AC signals, which are supplied to alternately switch the pair of switching elements Q1 and Q2, are pulse signals having frequencies substantially equal to the lighting frequency of the discharge lamp, for example, 20 to 45 kHz and having different phases from each other. These high frequency signals are supplied from a high frequency signal source to be mentioned later, which is a power source capable of controlling the duty factor of a pair of pulse signals. The frequency of the commercial low frequency AC power source AC is, for example, 50 Hz or 60 Hz. Here, low frequency AC current and high frequency AC current flow in both directions through the inductor L1 connected between the connecting points J1 and J2 of the circuit CR1.

The lighting device includes a chopper circuit CR2 including feedback circuits FB1 and FB2, which feed back the counter EMF generated in the inductor L1, with rectifier elements D3 to D6, a pair of rectifying elements D7 and D8 each connected to the pair of switching elements Q1 and Q2, and at least one of the pair of switching elements Q1 and Q2.

The lighting device includes a charge circuit CR3 connected to the output of the chopper circuit CR2, the charge circuit CR3 including at least two electrolytic condensers connected in series, a resonance circuit CR4 having an inductor L2 and a capacitor C3, which resonates with high frequency signals and lights a discharge lamp DL connected to its output with the resonance voltage, an inverter circuit CR5 including a pair of capacitors C5 and C6 having small capacitance, which converts the DC power stored in the charge circuit CR3 by an alternate switching action by the pair of switching elements Q1 and Q2 into high frequency AC power, and a switching device SW, one end of which is connected to a connection point J3 of capacitors C1 and C2 in the charge circuit CR3 and the other end of which is connected to a connecting point J2 of the pair of rectifier elements D1 and D2.

Next, a charging process for the electrolytic condensers C1 and C2 in the lighting device will be explained below. The pair of switching elements Q1 and Q2 forms a step-up chopper circuit CR2 corresponding with the positive/negative polarity of the AC voltage of the commercial AC power source AC, and each of outputs is charged in the same electrolytic condensers C1 and C2 in the charge circuit CR3. That is, ON/OFF operation of the switching device SW switches a path between the connection point J3 and the connection point J2 in a connecting state to a disconnecting state, and vice versa. The ON/OFF operation of the switching device SW is performed in such a manner that, for example, it is ON for a 100V AC source, and is OFF for a 200V AC source, according to different commercial power sources having a different output voltage from one another.

When the commercial power source voltage is 100V, for example, the switching device SW is set ON. Then, the step-up chopper circuits CR-1 or CR-2 shown by Mode 1 in FIG. 2A and Mode 2 in FIG. 2B, respectively, are formed by the action of the pair of switching elements Q1 and Q2, depending on the positive/negative polarity of the voltage of the power source AC, and each output is charged into each of the separate electrolytic condensers C1 and C2 output voltages of which are connected in series. The electrolytic condensers C1 and C2 in each Mode are charged as follows.

In Mode 1, the voltage of the power source AC is in the period of the positive half cycle, and the pair of switching elements Q1 and Q2 is turned ON/OFF alternately in this period as shown in FIG. 2A. Here, one state is defined as State (1), in which the switching element Q1 is OFF and Q2 is ON, and the other state is defined as State (2), in which the switching element Q1 is ON and Q2 is OFF.

In State (1), electric current flows in a direction shown by the dotted arrow A1 in a closed circuit (1) as follows:

> power source AC → inductor L1 → switching element Q2 → rectifying element D2 → power source AC
> Electromagnetic energy of high frequency is stored in the inductor L1.

In State (2), in which the switching element Q2 is turned OFF and the closed circuit (1) is opened, current flows in a direction shown by the dotted arrow A2 in a closed circuit (2) to charge the electrolytic condenser C1 as follows:

> power source AC → inductor L1 → rectifying element D5 → electrolytic condenser C1 → switching device SW → power source AC
> In this case, voltage stored in the electrolytic condenser C1 is a double voltage of the power source AC obtained by superimposing an equal voltage to the voltage of the power source AC on the voltage of the power source AC. That is, when the power source voltage is 100V, the stored voltage of the electrolytic condenser C1 is $100V \times \sqrt{2} \times 2 = 283V$.

In Mode 2, the voltage of the power source AC is in the period of the negative half cycle as shown in FIG. 2B. In this period, the pair of switching elements Q1 and Q2 are turned ON and OFF alternately. Here, the state in which the switching element Q1 is ON and Q2 is OFF is designated as State (1), and the state in which the switching element Q1 is OFF and Q2 is ON is designated as State (2).

In State (1), current flows in a direction shown by the dotted arrow in a closed circuit (1) to store electromagnetic energy of high frequency in the inductor L1 as follows:

> power source AC → rectifying element D1 → switching element Q1 → inductor L1 → power source AC

In State (2), where the switching element Q1 is turned OFF, the closed circuit (1) is open, electric current is caused to flow in a direction shown by the dotted arrow A2 in a closed circuit (2) to charge the electrolytic condenser C2 as follows:

> power source AC → switching device SW → electrolytic condenser C2 → rectifying element D6 → inductor L1 → power source AC

In this case, voltage stored in the electrolytic condenser C2 is a double voltage of the power source AC obtained by superimposing an equal voltage to the voltage of the power source AC on the voltage of the power source AC. That is, when the power source voltage is -100V, the stored voltage of the electrolytic condenser C2 is $100V\times\sqrt{2}\times2=283V$.

When the commercial power source voltage is 200V, for example, the switching device SW is set OFF. Then, the step-up chopper circuit CR2-1 of Mode 3, shown in FIG. 3A or the step-up chopper circuit CR2-2 of Mode 4 shown in FIG. 3B are formed by the action of the pair of switching elements Q1 and Q2 depending on the positive/negative voltage of the power source AC to charge separate electrolytic condensers C1 and C2 simultaneously. In this case, two electrolytic condensers C1 and C2 are charged as single condenser having combined capacitance of series-connected condensers C1 and C2.

In Mode 3, the voltage of the power source AC is in the period of the positive half cycle as shown in FIG. 3A. In this period, the pair of switching elements Q1 and Q2 are turned ON and OFF alternately. Here, one state in which the switching element Q1 is OFF and Q2 is ON is designated as State (1), and the other state in which the switching element Q1 is ON and Q2 is OFF is designated as State (2).

In State (1), current flows in a direction shown by the dotted arrow A1 in a closed circuit (1) to store electromagnetic energy of high frequency in the inductor L1 as follows:

power source AC → inductor L1 → switching element Q2 → rectifying element D2 → power source AC

In State (2), the switching element Q2 is turned OFF and the closed circuit (1) is open. Then, electric current is caused to flow in a direction shown by the dotted arrow A2 in a closed circuit (2) to charge the electrolytic condenser C1 and the electrolytic condenser C2 as follows:

power source AC → inductor L1 → rectifying element D5 → electrolytic condenser C1 → electrolytic condenser C2 → rectifying element D4 → power source AC

In this case, voltage stored in the condenser having the combined capacitance of the electrolytic condenser C1 and the electrolytic condenser C2 is a double voltage of the power source AC obtained by superimposing an equal voltage to the voltage of the power source AC on the voltage of the power source AC. That is, when the power source voltage is 200V, the stored voltage of the electrolytic condensers C1 and C2 is $200V\times\sqrt{2}\times2=565.7V$.

In Mode 4, the voltage of the power source AC is in the period of the negative half cycle as shown in FIG. 3B. In this period, the pair of switching elements Q1 and Q2 are turned ON and OFF alternately. Here, one state in which the switching element Q1 is ON and Q2 is OFF is designated as State (1), and the other state in which the switching element Q1 is OFF and Q2 is ON is designated as State (2).

In State (1), current flows in a direction shown by the dotted arrow A1 in a closed circuit (1) to store electromagnetic energy of high frequency in the inductor L1 as follows:

power source AC → rectifying element D1 → switching element Q1 → inductor L1 → power source AC

In State (2), the switching element Q1 is turned OFF, the closed circuit (1) is open. Then, electric current is caused to flow in a direction shown by the dotted arrow A2 in a closed circuit (2) to charge the electrolytic condenser C1 and the electrolytic condenser C2 as follows: power source AC → rectifying element D3 → electrolytic condenser C1 → electrolytic condenser C2 → rectifying element D6 → inductor L1 → power source AC

In this case, voltage stored in the condenser having the combined capacitance of the electrolytic condenser C1 and the electrolytic condenser C2 is a double voltage of the power source AC obtained by superimposing an equal voltage to the voltage of the power source AC on the voltage of the power source AC.

A lighting operation of a discharge lamp DL with inverted voltage by the lighting device for a discharging lamp according to the above-mentioned embodiment is carried out as follows. The electrolytic condensers C1, C2 act as smoothing capacitors, and inverter circuit CR 5 acts as neutral point type step up non-inversion inverter with the DC voltage across the smoothing capacitor C1, C2, to light the discharge lamp DL with high frequency voltage.

More specifically, when the commercial power source voltage is 100V, for example, the switching device SW is set ON. Then, high frequency power is supplied to a load circuit CR4 by alternate switching action of the pair of switching elements Q1 and Q2. Here, the state is designated as State (1) where the switching element Q1 is ON and Q2 is OFF, and the state is designated as State (2) where Q1 is OFF and Q2 is ON.

In State (1), current flows in a direction shown by the dotted arrow A1 in FIG. 4A to supply high frequency power to the load circuit CR4 as follows:

electrolytic condenser C1 → rectifying element D7 → switching element Q1 → load circuit CR4 → condenser C6 → electrolytic condenser C2

In this case, the high frequency voltage supplied to the load circuit CR4 is given as the sum of the stored voltage of the electrolytic condensers C1 and C2, and thus, the voltage supplied to the load circuit CR4 is:

$$100V \times \sqrt{2} \times 2 + 100V \times \sqrt{2} \times 2 = 282.8 + 282.8 = 565.7V$$

In State (2), current flows in a direction shown by the dotted arrow A2 in FIG. 4B to supply high frequency power to the load circuit CR4, as follows:

electrolytic condenser C1 → condenser C5 → load circuit CR4 → switching element Q2 → rectifying element D8 → electrolytic condenser C2

In this case, the high frequency voltage supplied to the load circuit CR4 is also given as the sum of the stored voltage of the electrolytic condenser C1 and the stored voltage of the electrolytic condenser C2, which is:

$$100V \times \sqrt{2} \times 2 + 100V \times \sqrt{2} \times 2 = 282.8 + 282.8 = 565.7V$$

The polarity of the voltage is reversed compared to that in State (1).

Next, when the commercial power source is 200V, for example, the switching device SW is set OFF. Then, high frequency power is supplied to the load circuit CR4 by alternate switching action of the pair of switching elements Q1 and Q2. Here, in a similar way, the state is designated as State (1) where the switching element Q1 is ON and Q2 is OFF, and the state is designated as State (2) where the switching element Q1 is OFF and Q2 is ON.

In State (1), current flows in a direction shown by the dotted arrow A1 in FIG. 5A to supply high frequency power to the load circuit CR4 as follows:

electrolytic condenser C1 → rectifying element D7 → switching element Q1 → load circuit CR4 → condenser C6 → electrolytic condenser C2

In this case, the high frequency voltage supplied to the load circuit CR4 is given as the stored voltage in a condenser having combined capacitance of the electrolytic condensers C1 and C2. Namely,

$$200V \times \sqrt{2} \times 2 = 565.7V$$

In State (2), current flows in a direction shown by the dotted arrow A2 in FIG. 5B to supply high frequency power to the load circuit CR4 as follows:

electrolytic condenser C1 → condenser C5 → load circuit CR4 → switching element Q2 → rectifying element D8 → electrolytic condenser C2

In this case, the high frequency voltage supplied to the load circuit CR4 is given as the stored voltage in a condenser having combined capacitance of the electrolytic condensers C1 and C2. Namely,

$$200V \times \sqrt{2} \times 2 = 565.7V$$

The polarity of the voltage is reversed compared with that in State (1).

The lighting device according to the embodiment of the present invention is able to operate with two or more different types of commercial voltage power sources having low frequency, for example, 100V AC and 200V AC by only switching the switching device SW between ON and OFF states, as described above. More precisely, when the duty of the pair of switching element Q1 and Q2 is being kept as 50%, the switching device SW is turned ON for the input voltage of 100V. At this time, the voltage stored in the charge circuit is obtained as $100V \times \sqrt{2} \times 2 + 100V \times \sqrt{2} \times 2 = 565.7V$. On the other hand, when the input voltage is 200V, the switching device SW is turned OFF. Thus, the voltage stored in the charge circuit CR3 is obtained as $200V \times \sqrt{2} \times 2 = 565.7V$. The output voltage equivalent to that obtained in the case of 100V input voltage described above can be obtained. Here, ON/OFF state of the switching device SW may be set manually in advance according to the commercial power source voltage used in the manufacturing process of the lighting device for a discharge lamp. Needless to say, this switching operation may be done automatically by detecting the commercial source voltage in actual use.

Next, a duty control for the pair of switching elements Q1 and Q2 in an inverter lighting operation of a lighting device for a discharge lamp according to the embodiment of the present invention will be explained referring to FIG. 6. FIG. 6 is a circuit diagram showing a detailed circuit configuration of the lighting device, which is the embodiment of the present invention shown in FIG. 1. In the circuit diagram of the lighting device shown in FIG. 6, a duty control circuit DTC of the pair of switching elements Q1 and Q2, an output voltage detecting circuit VDET for the power source AC and a drive circuit DRV for the pair of switching elements Q1 and Q2 are added to the circuit diagram shown in Fig.1. Since the other parts of the circuit diagram are the same as those in Fig.1, the same referential signs are assigned to components as those in Fig.1, and detailed explanation is omitted.

An output voltage of the output voltage detecting circuit VDET for the power source AC is supplied to the duty control circuit DTC as input signals. The duty control circuit DTC supplies duty control signals to the drive circuit DRV as its output signals. The drive circuit DRV generates a drive signal VG1 for Q1 and a drive signal VG2 for Q2 and supplies them to the corresponding gate electrodes of the pair of switching elements Q1 and Q2, respectively.

One example of a drive signal VG1 for Q1 and a drive signal VG2 for Q2 are shown in FIG. 7. As mentioned above, the drive signal VG1 and drive signal VG2 are pulse signals having frequencies substantially equal to the lighting frequency of the discharge lamp, for example, 20 to 45 kHz, and having different phases to each other as shown in the figure. The duty factor is controlled by the duty control signal output from the duty control circuit DTC. Here, the duty factor (ON duty factor) corresponds to a ratio of an ON state period (pulse width), where the drive signals VG1 and VG2 turn the switching elements Q1 and Q2 into an ON state, to a repetition period. The duty control circuit DTC controls the duty factor so as to decrease it when the output VAC of the output voltage detecting circuit VDET of the power source AC is high. Namely, it controls the duty factor to be inversely proportional to the output VAC. As a result, the drive voltage of the discharge lamp DL can be always maintained substantially constant by adjusting the duty factor of the drive signals VG1, VG2 of the switching elements Q1 and Q2 with the duty control circuit DTC, when the voltage of the power source AC is varied.

When the duty factors of the drive signal VG1 and of the drive signal VG2 exceed 50%, the pair of switching elements Q1 and Q2 could be turned ON at the same time, which could cause a short circuit, because the pair of switching elements Q1 and Q2 are connected in series in the lighting device according to the present invention. For this reason, the duty factor of the drive signals VG1, VG2 should be set less than 50%. However, if the duty factors of the drive signal VG1 and the drive signal VG2 are decreased to 30% or less in order to obtain a predetermined load voltage from a high source AC voltage, distortion of the load voltage waveform could be increased and the lighting operation of the discharge lamp DL might be unstable, causing the light to be put out.

FIGS. 8A and 8B are graphs showing an output waveform at the load when the duty ratio of a drive signal VG1 for Q1 and a drive signal VG2 for Q2 is about 43% and 30%, respectively. Here, VG1 is a pulse waveform of the drive signal VG1, and VDL is a drive voltage waveform of the discharge lamp DL. Therefore, the duty factor of the drive signal VG1 and the drive signal VG2 should be set in the following range:

$$30\% < duty\ factor < 50\%$$

Here, suppose a commercial power source of 200V is used the duty factor of the drive signal VG1 and the drive signal VG2 is set as 50%, the output voltage of 565.7V of the inverter is obtained. Next, suppose a commercial power source of 100V is used as the power source AC, the duty factor of the drive signal VG1 and the drive signal VG2 must be set as 75.0%, if the same inverter output voltage of 565.7V is required, which is not realized because it exceeds 50%.

On the other hand, suppose a commercial power source of 100V is used as the power source AC and the duty factor of the drive signal VG1 and the drive signal VG2 is set as 50%, the output voltage of 282.8V of the inverter is obtained. Next, suppose a commercial power source of 200V is used, the duty factor of Q1 drive signal VG1 and Q2 drive signal VG2 must be set as 0.0%, if the same inverter output voltage of 282. 8V is required, which is not realized because it is less than 30%.

As described above, if the voltage of the power source AC varies between 100V and 200V, it cannot be adapted by the adjustment of the duty factor only. However, in the lighting device according to the embodiment of the present invention, a predetermined output voltage can always be obtained for the load by ON/OFF operation of the switching device SW as well as adjusting the duty factor by using the duty control circuit DTC.

Although the detailed explanation about the embodiments of the present invention has been made, the present invention is not limited to the above-mentioned embodiments, but various modifications are possible within the scope of the present invention. For example, a pair of switching elements Q1 and Q2 was explained as a pair of power MOSFETs, however, power transistors or IGBTs may be also used. Further, the frequency of the power source AC and those of the high frequency signal for driving the switching elements Q1 and Q2 were shown only as examples, and are not limited to these particular frequencies.

**Claims**

1. A lighting device for a discharge lamp comprising:

   a bridge type rectifying and converting circuit including
   a pair of switching elements connected in series, each of which is switched alternately by a high frequency signal,
   a pair of rectifying elements connected in series, which is connected in parallel with the pair of switching elements connected in series, and
   an inductor and a low frequency AC power source connected in series, which are provided between a connecting point of the pair of switching elements and a connecting point of the pair of rectifying elements;
   a chopper circuit including a feedback circuit for feeding back counter electromotive force generated in the inductor of the bridge type rectifying and converting circuit and at least one of the pair of switching elements;
   a charge circuit connected to the output of the chopper circuit, the charge circuit including at least two capacitors connected in series;
   a resonant circuit for resonating with a high frequency voltage, so as to light a discharge lamp connected to the output end of the resonant circuit with the resonant voltage;
   an inverter circuit for converting DC power into a high frequency voltage charged in the charge circuit in response to the alternate switching action by the pair of switching elements, and supplying the high frequency voltage to the resonant circuit; and
   a switching device having one end connected to a connecting point of the two capacitors of the charge circuit and the other end connected to a connecting point of the pair of rectifying elements, switching device adapted for selectively connecting or disconnecting the connecting points.

2. The lighting device for a discharge lamp according to claim 1, wherein the lighting device further comprises a drive circuit for supplying each control electrodes of the pair of switching elements with a pair of driving pulse signals having a different phase by 180° from each other.

3. The lighting device for a discharge lamp according to claim 2, wherein the lighting device further comprises a duty control circuit for supplying the drive circuit with a control signal, which variably controls a duty factor of the pair of driving pulse signals.

4. The lighting device for a discharge lamp according to claim 3, wherein the duty factor of the pair of drive pulse signals is variably controlled within the range from 30% to less than 50%.

5. The lighting device for a discharge lamp according to claim 3, wherein the switching device connected between the connecting point of the two capacitors of the charge circuit and the connecting point of the pair of rectifying elements is kept in an OFF state when the voltage of the low frequency AC power source is high, and is kept in an ON state when the voltage of the low frequency AC power source is low.

6. The lighting device for a discharge lamp according to claim 1, wherein the feedback circuit comprises a first feedback circuit including a third and a fourth rectifying elements connecting electrodes opposite to the connecting point of the pair of rectifying elements and the connecting point of the two capacitors in the charge circuit, and a second feedback circuit including a fifth and a sixth rectifying elements connecting electrodes opposite to the connecting point of the pair of switching elements and the connecting point of the two capacitors in the charge circuit.

7. The lighting device for a discharge lamp according to claim 1, wherein a discharge lamp is connected to the output end of the resonant circuit.

Fig.1

Fig.2A

Fig.2B

Fig.3A

Fig.3B

Fig.4A

Fig.4B

Fig.5A

Fig.5B

Fig.6

EP 2 083 512 A1

Fig.7

VG1 ⎍⎍⎍⎍⎍⎍ H L

VG2 ⎍⎍⎍⎍⎍⎍ H L

Fig.8A

Fig.8B

## INTERNATIONAL SEARCH REPORT

International application No.

PCT/JP2007/071804

| A. CLASSIFICATION OF SUBJECT MATTER |
|---|
| H02M7/48(2007.01)i, H05B41/24(2006.01)i, H05B41/282(2006.01)i |

According to International Patent Classification (IPC) or to both national classification and IPC

| B. FIELDS SEARCHED |
|---|

Minimum documentation searched (classification system followed by classification symbols)
H02M7/48, H05B41/24, H05B41/282

Documentation searched other than minimum documentation to the extent that such documents are included in the fields searched
   Jitsuyo Shinan Koho        1922-1996   Jitsuyo Shinan Toroku Koho   1996-2008
   Kokai Jitsuyo Shinan Koho   1971-2008   Toroku Jitsuyo Shinan Koho   1994-2008

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2005-73305 A  (Harison Toshiba Lighting Corp.), 17 March, 2005 (17.03.05), Par. Nos. [0027] to [0050]; Figs. 1, 3 (Family: none) | 1-7 |
| Y | JP 2002-165464 A  (Samsung Electronics Co., Ltd.), 07 June, 2002 (07.06.02), Par. Nos. [0025] to [0029]; Fig. 3 (Family: none) | 1-7 |

☐ Further documents are listed in the continuation of Box C.       ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 08 January, 2008 (08.01.08) | 15 January, 2008 (15.01.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005124369 A
- JP 2005124370 A
- JP 2005124371 A